Europäisches Patentamt

(19) European Patent Office

Office européen des brevets

(11) Publication number : **0 442 756 A1**

# (12) EUROPEAN PATENT APPLICATION

(21) Application number : **91301242.3**

(51) Int. Cl.⁵ : **G21D 9/00**

(22) Date of filing : **15.02.91**

(30) Priority : **16.02.90 US 481097**

(43) Date of publication of application :
**21.08.91 Bulletin 91/34**

(84) Designated Contracting States :
**BE CH ES FR GB IT LI**

(71) Applicant : **WESTINGHOUSE ELECTRIC
CORPORATION
Westinghouse Building Gateway Center
Pittsburgh Pennsylvania 15222 (US)**

(72) Inventor : **Lim, Myong-Jai Gene
4971 North Lawn Drive
Murrysville, PA 15668 (US)**
Inventor : **Bruschi, Howard John
1316 Fox Chapel Road
Pittsburgh, PA 15238 (US)**

(74) Representative : **van Berlyn, Ronald Gilbert
23, Centre Heights
London, NW3 6JG (GB)**

(54) **Electric power utility.**

(57)   A system for supplying electrical power to a consumer network having a power demand which varies cyclically between minimum and maximum values, including a main power generating subsystem composed of : a nuclear power reactor for generating thermal energy ; a heat exchange unit coupled to the reactor for generating steam from the thermal energy generated by the reactor ; a mechanical unit coupled to the heat exchange unit for converting thermal energy contained by the steam into mechanical energy ; and an electromechanical power generating unit coupled to the mechanical unit for converting the mechanical energy into electrical energy ; and a supplemental power generating subsystem composed of a peripheral energy conversion and storage unit selectively coupled to one of the heat exchange unit and the mechanical unit for extracting thermal energy from the steam generated by the heat exchange unit or mechanical energy from the mechanical unit, and for converting the extracted energy into a stored form ; and a supplemental power generating unit connected for generating electrical power from the energy stored by the energy conversion and storage unit.

The main subsystem has a power generating capacity which is between the minimum and maximum consumer network demand and the supplemental subsystem has a capacity at least equal to the difference between the maximum consumer network demand and the capacity of the main subsystem.

EP 0 442 756 A1

FIG.1

## ELECTRIC POWER UTILITY

The present invention relates to power generating plants for electric utilities, and particularly plants which are driven by a nuclear reactor.

Electric power utilities throughout the world are confronted with a constantly increasing power demand which, to the extent it can be met, could lead to improved living standards. However, achievement of this objective poses significant economic problems created in no small measure by substantial fluctuations in power demand, or load, during the'course of each day. The construction of added power generation facilities capable of meeting peak demand requires substantial capital investment and inevitably results in excess capacity during off-peak hours. Since the investment required to provide the capability of meeting peak demands must, eventually, be paid by consumers, the addition of power generating capacity sufficient to meet peak loads generally has the effect of increasing utility rates.

Moreover, added power generating plants inevitability contribute to environmental pollution.

Efforts have been made to address these problems by encouraging consumers to alter their power consumption patterns in a manner to equalize demand. These efforts are generally recognized to offer a short-term solution and have met with only limited success. Indeed, the trend in recent decades has been toward an increase in the demand variation over the course of a day. It is estimated that the demand currently experienced by a typical utility reaches a minimum value which is of the order of 60 percent of the peak value.

When a utility acquires sufficient capacity to fully meet peak demand, the inevitable result is a reduction in operating economy and cost effectiveness attributable to the substantial periods when the system is operating at less than full capacity.

It is an object of the present invention to meet demands for increased electrical power in an economical and cost-effective manner, while minimizing the need for additional power generating capacity.

The above and other objects are achieved, according to the present invention, by a system for supplying electrical power to a consumer network having a power demand which varies cyclically between minimum and maximum values, comprising a main power generating subsystem composed of : a nuclear power reactor for generating thermal energy ; heat exchange means coupled to the reactor for generating steam from the thermal energy generated by the reactor ; mechanical means coupled to the heat exchange means for converting thermal energy contained by the steam into mechanical energy ; and electromechanical power generating means coupled to the mechanical means for converting the mechanical energy into electrical energy ; and a supplemental power generating subsystem composed of peripheral energy conversion and storage means selectively coupled to one of the heat exchange means and the mechanical means for extracting thermal energy from the steam generated by the heat exchange means or mechanical energy from the mechanical means, and for converting the extracted energy into a stored form ; and supplemental power generating means connected for generating electrical power from the energy stored by the energy conversion and storage means ; wherein the main subsystem has a power generating capacity which is between the minimum and maximum consumer network demand and the supplemental subsystem has a capacity at least equal to the difference between the maximum consumer network demand and the capacity of the main subsystem.

A further object of the invention is to provide power generation facilities which can be constructed to have a capacity corresponding closely to average daily demand while being capable of satisfying peak demand.

A still further object of the invention is to provide power generating plants which can be operated more economically, in part by using excess generating capacity to produce marketable products.

In the drawings, mechanical couplings are illustrated by broken lines, electrical power conductors are illustrated by single solid lines, and fluid conduits are illustrated by double lines.

Figure 1 is a schematic diagram of one preferred embodiment of a power generating system according to the invention.

Figure 2 is a schematic diagram of one embodiment of a component part of the system of Figure 1.

The present invention relates particularly to power generating systems whose prime movers are nuclear reactors which generate steam to drive turbines. An overriding requirement of a nuclear power system is that the reactor be operated at a substantially constant level, to thereby produce a substantially constant output. Therefore, in existing plants, any of the heat energy produced by the reactor and not required to meet existing demand must be disposed of, generally without performing any useful work. As will be described in greater detail below, the present invention uses the excess output of such a reactor during off-peak periods to, in effect, store energy in a variety of forms for use in generating electrical power during peak periods. With such an arrangement, the reactor system can be dimensioned to produce an output which corresponds closely that required to meet average electric power demand while effectively using the excess energy produced by the reactor during periods of low demand.

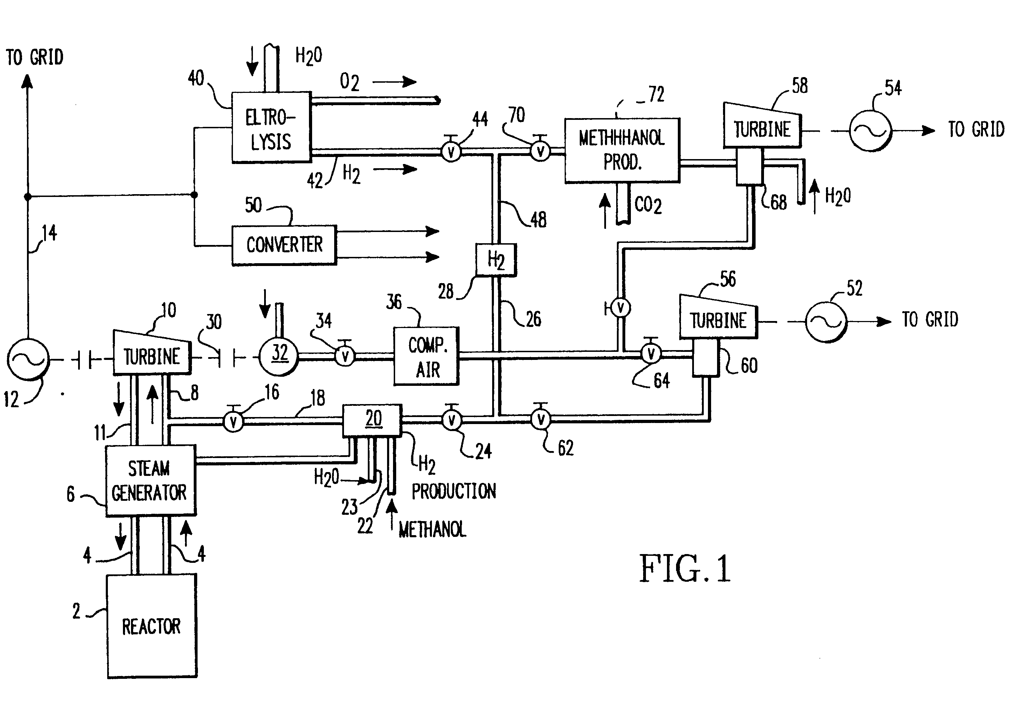

Figure 1 illustrates an electric power generating installation which includes, as the prime mover, a nuclear reactor 2 whose coolant, typically pressurized or boiling water, is circulated via conduits 4 to a steam generator 6 in which, by indirect heat exchange, steam is produced. The steam produced by generator 6 is conducted, via conduit 8, to a steam turbine 10 which is mechanically coupled to a main electric power generator 12. The turbine exhaust, usually in the form of a condensate, is returned to steam generator 6 via a return conduit 11.

Generator 12 supplies electric power to a utility grid via conductors 14. It will be appreciated that the system described thus far could include a plurality of turbines 10 and a plurality of generators 12.

According to the invention, a variety of peripheral facilities are provided for extracting excess energy from the main power generation system. These peripheral facilities are connected, respectively, to extract and utilize heat energy directly from steam generator 6, mechanical energy from the output shaft of turbine 10, and electrical energy from conductors 14. As a result, each of the forms of energy produced in the main power generation plant can be utilized in the most efficient manner. The result is a substantial degree of flexibility which enables the system to be adjusted to external environmental factors which will influence the economic value of the production from each peripheral facility.

In the illustrated exemplary embodiment of a system according to the present invention, steam supply conduit 8 is connected, via a suitably controllable valve 16, to a steam conduit 18 via which a selected portion of the steam produced by generator 6 can be delivered to a hydrogen production unit 20 which is also supplied with methanol, via an inlet 22, and with water, via an inlet 23, and which is operated to produce hydrogen gas which may be conducted, via a valve 24 and a conduit 26, to a hydrogen storage medium 28. The methanol supplied via inlet 22 can be in the form of natural or synthetic gas. Hydrogen production unit 20 can be constituted by any well-known system capable of converting methanol into hydrogen with the aid of energy derived from steam. Indeed, each of the components of a plant according to the present invention can be constructed according to principles already known in the art. Hydrogen storage medium 28 can, for example, be constituted by a porous mass of metal hydride which permits safe storage of hydrogen.

The shaft of turbine 10 is mechanically coupled, preferably via a clutch 30, to an air compressor 32 which withdraws air from the environment and delivers compressed air, via a valve 34, to a compressed air storage region 36. To achieve the objectives of the present invention, region 36 should have a very large capacity and, depending on the geographical location of the plant, could be constituted by all or part of an abandoned mine or natural underground cavity. Compressor 32 and region 36 thus constitute the second peripheral facility.

The third peripheral facility is connected to receive excess electrical power from conductor 14 and, in the illustrated embodiment, includes an electrolysis unit 40 which utilizes the electrical energy which it receives to dissociate water into hydrogen and oxygen. The hydrogen, which is delivered to outlet conduit 42, can be delivered, via a valve 44 and a conduit 48, to storage medium 28. The oxygen produced by unit 40 may, in an auxiliary facility, be burned with hydrogen to generate superheat for producing superheated steam, for direct use to heat adjacent buildings or for use in various types of high- temperature manufacturing processes. The hydrogen produced by units 20 and 40 and the oxygen produced by unit 40 may also be utilized as the fuel for a fuel cell. The electrical energy produced by the fuel cell can be used to drive direct current loads, while the waste water produced by the fuel cell can be used as a hot water supply or can be supplied to a heat pump to provide building heat and air conditioning. The fuel cells employed may be those which utilize solid oxide technology. The hydrogen produced by units 20 and 40 may also be used as fuel for aircraft or ground vehicles, or for use as a feedstock. Indeed, it could be used for any known purpose, and the specific uses selected would be based on economic considerations.

The third peripheral facility further includes an electrical energy converter 50 connected for converting the electrical energy which it receives into a form suitable for charging various types of energy storage devices, such as lithium batteries and sodium-sulphur batteries, which can be constructed to store large quantities of energy. Converter 50 could be constructed, in a known manner, as a bidirectional energy transfer device capable of returning stored energy, in the appropriate form, to conductors 14.

Thus, during low demand periods, a portion of the energy generated by reactor 2 may be stored in the form of, for example, hydrogen, compressed air and the charge on batteries. Other known forms of energy storage could be utilized and would be selected primarily on the basis of economic considerations. Such other forms of energy storage might include, but are not limited to, superconducting magnetic energy storage.

During periods of peak demand, when conversion of all of the energy from reactor 2 into electrical energy in generator 12 is not sufficient, valve 16 will be closed, clutch 30 disengaged and the supply of electrical energy to devices 40 and 50 blocked. At the same time, supplemental electrical energy may be supplied to the grid by two or more generators 52, 54, etc., driven by turbines 56, 58, etc., which are in turn, powered by the previously stored energy.

Thus, by way of example, turbine 56 may be a high efficiency gas turbine driven by exhaust gas from a combustor 60 which is supplied, via valves 62 and 64, with hydrogen from storage medium 28 and compressed air from air storage region 36. Turbine 58 may also be a high efficiency gas turbine connected to be driven by exhaust gas from a combustor 68 which burns a mixture of methanol and water in the presence of compressed air. To operate combustor 68, hydrogen is delivered from storage medium 28 via a valve 70 to a methanol producing unit 72 which, for the required reaction, is also supplied with $CO_2$. In accordance with the invention, the $CO_2$ supplied to unit 72 may be derived from the exhaust gases leaving turbines 56 and 58, thereby reducing emissions from the system. In this way, unit 72, which can be constructed in accordance with principles known in the art, also serves to eliminate all or part of the $CO_2$ emitted from turbines 56 and 58. If more methanol is produced in unit 72 than is immediately required by combustor 68, the excess methanol can be stored for other uses, including subsequent delivery to inlet 22 of unit 20, or for sale as a fuel for automobiles, boilers and other power generating systems.

According to another possibility envisioned by the invention, the compressed air produced by compressor 32 and/or stored in region 36 could also be employed for other uses. By way of example, a portion of this compressed air can be stored in an undersea tank and used in a sea water regenerator or as an air curtain for sea farming. According to other possibilities, compressed air can be stored in a shoreline/harbor air tank and used for the clean up of oil spills or in a sweeper for cleaning pollution from an ocean surface.

With the arrangement according to the present invention, the main power generating system composed of reactor 2, generator 6, turbine 10 and generator 12 can be constructed to have a capacity close to the average power demand of the plant, with the energy stored during periods of low demand being employed to supply the additional power required during periods of peak demand. Thus, for supplying a given group of consumers, a plant according to the present invention can have a lower capacity primary generating system and can operate with high efficiency in a cost-effective manner.

It will be appreciated that existing nuclear reactor powered plants could be retrofitted with peripheral facilities of the type contemplated by the present invention to effectively increase their power generating capacity with a substantially smaller investment than would be required to construct an additional plant to provide the added capacity.

It is contemplated that all of the peripheral facilities illustrated in Figure 1 would be installed at the same location as the main plant components, so that long conduits or connecting power lines would not be required. However, the batteries charged by converter 50 could be located directly at consumer locations so that during periods of high demand, some or all of the power required by those locations could be supplied directly by the batteries rather than being carried by the grid.

If desired, turbine 10 could be coupled to generator 12 via a clutch, as illustrated to allow for situations where all of the mechanical power produced by turbine 10 can suitably be employed to drive compressor 32.

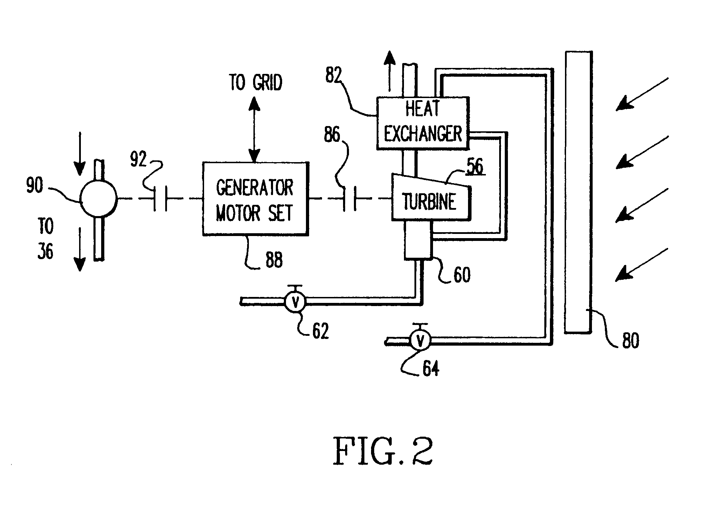

In further accordance with the invention, a portion of the system shown in Figure 1 could be given the modified form illustrated in Figure 2. This modification is illustrated with respect to turbine 56. According to this embodiment, when turbine 56 is to be driven in order to generate auxiliary electrical power, valves 62 and 64 are open to supply hydrogen from storage medium 28 and compressed air from storage region 36. Before the compressed air reaches combustor 60, it is caused to flow in thermal communication with a solar thermal energy collector panel 80 so that the compressed air is heated by solar energy. The compressed air is then conducted through a heat exchanger 82 where it is further heated by exhaust gas from turbine 56. Then, the heated compressed air is delivered to combustor 60 where a more efficient combustion operation is achieved due to the preheating of the compressed air.

The shaft of turbine 56 is coupled, via a first clutch 86, to a generator-motor set 88 which replaces generator 52 of Figure 1. The electrical power produced when set 88 is driven as a generator is then supplied to the grid.

During periods when electrical power need not be supplied by the peripheral facilities, electrical power can be supplied to set 88 and its shaft can be coupled to an air compressor 90 via a further clutch 92. During this operation, clutch 86 would be disengaged, while clutch 92 will be disengaged when turbine 56 is in operation. Compressor 90 may be provided in addition to compressor 32 or, depending on the design of the overall system, may replace compressor 32. When compressor 90 is in operation, the compressed air which it generates is supplied to storage region 36.

The modified structure shown in Figure 2 offers particular benefits because turbine 56 would be operated during periods of peak power demands which occur almost entirely during daylight hours when solar energy would be likely to be available for heating the compressed air.

While the description above refers to particular embodiments of the present invention, it will be understood that many modifications may be made without departing from the spirit thereof. The accompanying claims are intended to cover such modifications as would fall within the true scope and spirit of the present invention.

EP 0 442 756 A1

## IDENTIFICATION OF REFERENCE NUMERALS USED IN THE DRAWINGS

| LEGEND | REF. NO. | FIGURE |
|---|---|---|
| REACTOR | 2 | 1 |
| STEAM GENERATOR | 6 | 1 |
| TURBINE | 10 | 1 |
| $H_2$ | 28 | 1 |
| COMP. AIR | 36 | 1 |
| ELTROLYSIS | 40 | 1 |
| CONVERTER | 50 | 1 |
| TURBINE | 56 | 1 |
| TURBINE | 56 | 2 |
| TURBINE | 58 | 1 |
| METHHHANOL PROD. | 72 | 1 |
| HEAT EXCHANGER | 82 | 2 |
| GENERATOR MOTOR SET | 88 | 2 |

**Claims**

1. A system for supplying electrical power to a consumer network having a power demand which varies cyclically between minimum and maximum values, characterized in that it comprises :

   a main power generating subsystem composed of : a nuclear power reactor (2) for generating thermal energy ; heat exchange means (6) coupled to said reactor (2) for generating steam from the thermal energy generated by said reactor (2) ; mechanical means (10) coupled to said heat exchange means (6) for converting thermal energy contained by the steam into mechanical energy ; and electromechanical power generating means (12) coupled to said mechanical means (10) for converting the mechanical energy into electrical energy ; and

   a supplemental power generating subsystem composed of : peripheral energy conversion and storage means (20,28,32,36) selectively coupled to one of said heat exchange means (6) and said mechanical means (10) for extracting thermal energy from the steam generated by said heat exchange means (6) or mechanical energy from said mechanical means (10), and for converting the extracted energy into a stored form ; and supplemental power generating means (52-58) connected for generating electrical power from the energy stored by said energy conversion and storage means (20,28,32,36) ;

   wherein said main subsystem has a power generating capacity which is between the minimum and maximum consumer network demand and said supplemental subsystem has a capacity at least equal to the difference between the maximum consumer network demand and the capacity of said main subsystem.

2. A system as defined in claim 1 characterized in that the power generating capacity of said main subsystem corresponds substantially to the average power demand of the consumer network.

3. A system as defined in claim 2 characterized in that : said peripheral energy conversion and storage means (20,28,32,36) comprise a first storage assembly composed of an air compressor (32) driven by mechanical

6

energy supplied by said mechanical means (10), and means defining a container (36) for storing compressed air produced by said compressor (32) ; and said supplemental power generating means (52-58) comprise a turbine (56,58) driven by exhaust gases produced by combustion of a fuel with air and connected to receive compressed air from said container, and an electrical power generator (52,54) connected to be driven by said turbine (56,58).

4. A system as defined in claim 3 characterized in that said supplemental power generating means (52-58) further comprise : heating means (80,82) disposed between said container (36) and said turbine (56) for heating compressed air prior to combustion.

5. A system as defined in claim 4 characterized in that said heating means comprise a solar heater (80) for heating the compressed air with solar energy.

6. A system as defined in claim 4 characterized in that said heating means comprise a heat exchanger (82) for heating the compressed air with exhaust gases expelled from said turbine (56).

7. A system as defined in claim 3 characterized in that said peripheral energy conversion and storage means (20,28,32,36) further comprise a second storage assembly composed of : a processing unit (20) connected to extract thermal energy from the steam generated by said heat exchange means (6) for using the extracted thermal energy to derive hydrogen from a hydrogen-containing starting material ; means defining a second container (28) for storing the hydrogen derived by said processing unit (20) ; and means (62) for delivering hydrogen from said second container to said turbine for use as fuel.

8. A system as defined in claim 7 characterized in that said peripheral energy conversion and storage means (20,28,32,36) further comprise a third storage assembly composed of : an electrical energy conversion unit (40,50) connected to the output of said electromechanical power generating means (12) for converting electrical energy into a stored form.

9. A system as defined in claim 8 characterized in that said electrical energy conversion unit comprises an electrolysis device (40) for utilizing electrical energy to dissociate water into hydrogen and oxygen.

10. A system as defined in claim 8 characterized in that said electrical energy conversion unit comprises a battery charging device (50).

11. A system as defined in claim 1 characterized in that said peripheral energy conversion and storage means (20,28,32,36) comprise a first processing unit (20) connected to extract thermal energy from the steam generated by said heat exchange medium for using the extracted thermal energy to derive hydrogen from a hydrogen-containing starting material, and a second processing unit (72) connected for producing methanol from the hydrogen derived by said first processing unit (20).

12. A system as defined in claim 11 characterized in that said supplemental power generating means (52-58) comprise a gas turbine (56,58) driven by exhaust gases produced by combustion of a fuel with air, said turbine having an exhaust gas outlet connected to supply $CO_2$ to said second processing unit (72) as a starting material for the production of methanol.

13. A method of generating electrical power for a consumer network having a power demand which varies cyclically between minimum and maximum values, by means of a system which comprises :

a main power generating subsystem composed of : a nuclear power reactor (2) for generating thermal energy ; heat exchange means (6) coupled to said reactor (2) for generating steam from the thermal energy generated by said reactor (2) ; mechanical means (10) coupled to said heat exchange means (6) for converting thermal energy contained by the steam into mechanical energy ; and electromechanical power generating means coupled to said mechanical means (10) for converting the mechanical energy into electrical energy ; and

a supplemental power generating subsystem composed of : peripheral energy conversion and storage means (20,28,32,36) selectively coupled to one of said heat exchange means (6) and said mechanical means (10) for extracting thermal energy from the steam generated by said heat exchange means (6) or mechanical energy from said mechanical means (10), and for converting the extracted energy into a stored form ; and supplemental power generating means (52-58) connected for generating electrical power from the energy stored by said energy conversion and storage means (20,28,32,36) ;

characterized in that said main subsystem has a power generating capacity which is between the minimum and maximum consumer network demand and said supplemental subsystem has a capacity at least equal to the difference between the maximum consumer network demand and the capacity of said main subsystem, and further characterized in that said method comprises :

operating the reactor (2) to produce a substantially constant power output ;

during periods of low consumer network power demand, supplying energy produced by the reactor (2) to the supplemental power generating subsystem ; and

during periods of high consumer network power demand, operating the supplemental power generating means (52-58) to supply power to the consumer network.

FIG.1

EP 0 442 756 A1

FIG.2

European Patent
Office

**EUROPEAN SEARCH REPORT**

Application Number

EP 91 30 1242

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2283524 (CEA)<br>* page 1, lines 1 - 24 *<br>* page 1, line 39 - page 3, line 14; figure *<br>--- | 1, 7, 9, 13 | G21D9/00 |
| A | FR-A-2253254 (G.A.RIGOLLOT)<br>* page 1, line 1 - page 2, line 10 *<br>* page 3, line 13 - page 4, line 3; figure 1 *<br>--- | 1, 3 | |
| A | US-A-3681920 (MARGEN)<br>* column 1, lines 5 - 9 *<br>* column 1, lines 37 - 67 *<br>* column 2, lines 26 - 47; figure 1 *<br>----- | 1, 8 | |
| | | | **TECHNICAL FIELDS SEARCHED (Int. Cl.5 )** |
| | | | G21D |

| The present search report has been drawn up for all claims | | |
|---|---|---|
| Place of search | Date of completion of the search | Examiner |
| THE HAGUE | 23 APRIL 1991 | CAPOSTAGNO E. |

EPO FORM 1503 03.82 (P0401)